# EUROPEAN PATENT SPECIFICATION

(11) **EP 1 083 044 B1**
(45) Date of publication and mention of the grant of the patent: **05.06.2002**
(21) Application number: 99914574.1
(22) Date of filing: 21.04.1999
(51) Int. Cl.: B32B 29/06, B44C 5/04

(54) **HIGH PRESSURE LAMINATED MATERIAL FOR FLOORS**
HOCHDRUCKSCHICHTPRESSSTOFFPLATTE FÜR BÖDEN
MATERIAU STRATIFIE HAUTE PRESSION POUR SOLS

(30) Priority: 22.04.1998 ES 9800846
(43) Date of publication of application: 14.03.2001
(73) Proprietor: Aismalibar, S.A., 08100 Montcada i Reixac (ES)
(72) Inventor: BALSELLS COCA, Felipe, E-08032 Barcelona (ES); FONT CISTERO, Josep Ma, E-08023 Barcelona (ES)
(74) Representative: Ponti Sales, Adelaida
(86) International application number: ES9900104
(87) International publication number: WO9954135

(56) References cited:
- EP-A- 0 288 107
- DE-A- 1 779 557
- GB-A- 1 566 086
- GB-A- 2 158 009
- GB-A- 2 224 972

## Description

The present invention relates to a high-pressure layered material for floors, with the appearance of a wooden parquet and possessing improved characteristics of resistance to extreme ambient conditions, and particularly dampness.

### BACKGROUND OF THE INVENTION

Wooden parquet floors have been used for a long time for floors in houses, sports facilities, public areas and others; however, wood is a costly and delicate material which deforms and is scratched easily and requires frequent maintenance.

With the objective of replacing wooden parquet floors with a material having an equally warm and pleasant appearance but that is more resistant to aggression and that does not require maintenance, a number of laminated materials have been developed that have the appearance of wooden parquet.

Some of these materials are made up a fine sheet of chipboard covered on its upper side with a sheet of decorative material, while other more sophisticated materials are laminates made up of several sheets of kraft paper impregnated with phenolic resins and a layer of decorative material on the upper part, which are compacted at low pressure. All these materials have the disadvantage that they have to be of considerable thickness if they are to have sufficient mechanical strength, while they are also susceptible to deformation or deterioration in the presence of water or humidity.

The Applicant has developed a laminated material that comprises a plurality of sheets of kraft paper impregnated with phenolic resins, at least one decorative layer and at least one overlay highly resistant to abrasion; the lower part of the laminate also incorporates a barrier. This entire set of sheets is compacted at high pressure and temperature. Even when of low thickness, this material has proved to be highly resistant both mechanically and in the presence of liquids or humidity, thus having a very satisfactory performance in general.

It has nevertheless been found in practice that this material, under extreme temperature and humidity conditions, such as those in tropical countries and some extremely dry atmospheres, has a certain tendency to adopt a curvature greater than that desirable for a quality product.

### DESCRIPTION OF THE INVENTION

The main aim of the present invention is to provide a material with the appearance of a wooden parquet floor but that does not have the mentioned disadvantages and is suitable for any environmental conditions, including extreme conditions of temperature and humidity.

This objective is achieved with the high-pressure layered material of the invention for floors, which is characterised in that it also includes at least a second barrier, incorporated into the material prior to compacting.

The presence of the second barrier limits the penetration of humidity into the material, even when it is exposed for a long time to a combination of high temperatures and humidity, thereby preventing any deformation thereof. Furthermore, it is a relatively low-cost solution.

In accordance with particularly advantageous embodiments, the second barrier can be situated between two sheets of kraft paper impregnated with phenolic resins, or alternatively between one decorative layer and the first sheet of kraft paper impregnated with phenolic resins.

While the first barrier prevents penetration of humidity into the material from the lower part of the laminated material, the second barrier limits the penetration of humidity into the sheaf of sheets of kraft paper from the upper part.

The adhesiveness of the barrier to the sheets of kraft paper is better than its adhesiveness to the decorative layer; for that reason, it may be advisable to leave one of the sheets of kraft paper above the barrier in order to facilitate adhesion.

Preferably, the barriers comprise at least one layer of a material selected from amongst aluminium, high-density polyethylene, polypropylene and kraft paper pre-impregnated with epoxy resin, and can be made up of several layers, of different materials.

According to one embodiment, the barriers comprise two exterior sheets of kraft paper and one intermediate film of polyethylene metallised with a layer of aluminium, the assembly being impregnated with a phenolic resin.

This structure facilitates adhesion of the barriers to the rest of the material.

In accordance with one aspect of this invention, at least one of the exposed sides of the barriers is treated in order to improve its adhesiveness.

This characteristic is decisive for achieving a quality product, for the adhesiveness of the majority of the products usable as a barrier is deficient.

### BRIEF DESCRIPTION OF THE DRAWINGS

For a better understanding of all that has been outlined, some drawings are attached which, schematically and solely by way of non-restrictive example, show a practical case of embodiment.

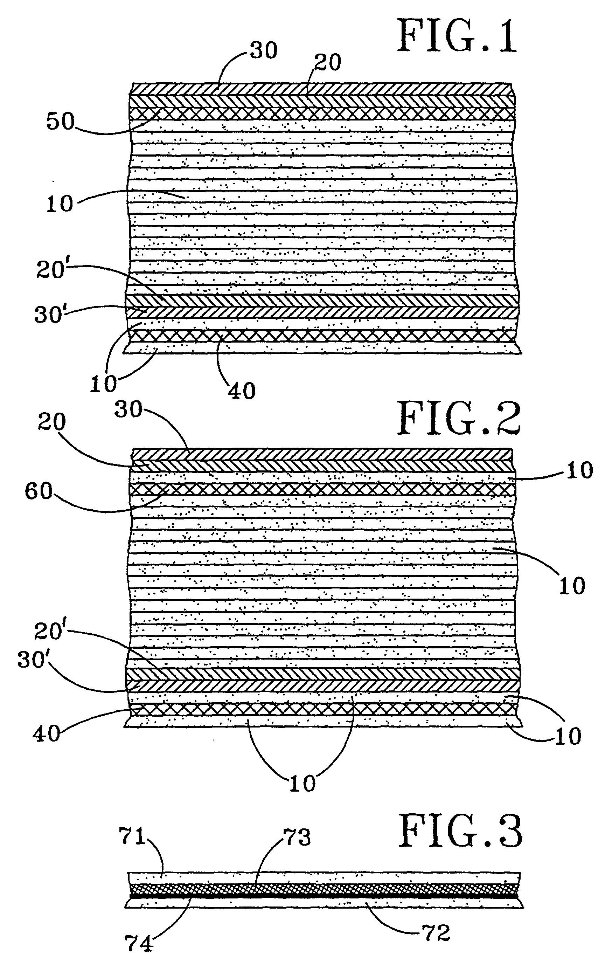

In said drawings, Figure 1 is a schematic section view showing the composition of a first embodiment of the laminated material of the invention;
Figure 2 is a section view similar to that of Figure 1, for a slightly different embodiment of the material; and
Figure 3 is a schematic section of a composition of the barrier in accordance with the invention.

### DESCRIPTION OF A PREFERRED EMBODIMENT

The laminated material shown in the figures is for the greater part of its thickness made up of a number of sheets 10 of kraft paper impregnated with a phenolic resin, on top of which is placed a decorative layer 20, constituted by a decorative paper that imitates, for example, the grain of wood, impregnated with a melamine resin, and an overlay 30 that is highly resistant to abrasion.

Also incorporated into the laminated material is a further decorative layer 20' and a further overlay 30', placed between the sheets 10; these additional layers balance the material, preventing it from curving during the process of compacting in a press. For this purpose, the layers 20' and 30' could also be replaced by single layer of decorative material of greater thickness.

According to a first embodiment of the invention, illustrated in Figure 1, the lower part of the laminated material has a first barrier 40, while a second barrier 50 is placed between the decorative layer 20 and the first sheet 10 of kraft paper.

Alternatively, the second barrier can be situated between the first two sheets 10 of kraft paper, as shown with reference number 60 in Figure 2.

Since the materials that have good barrier properties have very poor characteristics of adhesiveness to the other sheets, especially those impregnated with melamine resins, the materials used as barriers must be selected carefully and submitted to a treatment that allows them to adhere to the other sheets, since the assembly could otherwise deteriorate rapidly.

Following analysis of different materials and treatments, it has been found that some compositions suitable for the barriers 40, 50 and 60 are those described below by way of example.
A) Aluminium foil of 30 µm thickness
B) Aluminium foil of 30 µm thickness, coated on both sides with a 20 µm adhesive layer
C) Laminate made up of:
   one 100 µm sheet of kraft paper
   one 30 µm sheet of polypropylene
   one 100 µm sheet of kraft paper
D) Laminate made up of:
   one 100 µm sheet of kraft paper
   one 30 µm sheet of polypropylene
   one 1 µm metallised layer
   one 100 µm sheet of kraft paper
E) Sheet of kraft paper impregnated to saturation with epoxy resin, of approximately 400 µm thickness

Laminates B,C,D are produced in a conventional way and incorporated ready-formed into the layered material, before the pressing operation on that material.

It has been found that aluminium foil (A), coated on both sides with an appropriate adhesive, is the most satisfactory material as a watertight barrier. Appropriate adhesives can be epoxy, acrylic, etc. It also has a further advantage, which is that it can play a role in the diffusion of heat through the material, as for example when the material is to be laid in a building which has underfloor heating.

On the other hand, the barrier made up of a sheet of kraft paper impregnated with epoxy resin (E) is a semi-permeable barrier which, under certain conditions with large differentials of humidity and dryness between one and the other side of the laminated material, has remarkable advantages because it allows a good balance of stresses, with dilations compensated throughout the thickness of the laminated material, thereby largely preventing curvature.

The paper impregnated with epoxy resin in the E-type barrier can also be cotton kraft-linters paper, α-cellulose paper and other types. An example of epoxy resin suitable for impregnation would be a resin based on bisphenol A and epichlorhydrin, whether or not modified with reactive plastifiers and with suitable hardeners. Examples of reactive plastifiers are adipic acid, dimer acids, dodecylsuccinic anhydride, etc.; suitable hardeners for this application are the novolac resins, dicyandiamide and others.

One example of a compound barrier is that shown in Figure 3, which corresponds to a laminate of the D-type: it comprises two sheets 70 and 71 of kraft paper, between which is laid one sheet 73 of a suitable plastic, such as polyethylene or polypropylene, on which a thin layer 74 of aluminium has been applied. The entire assembly is impregnated with a phenolic resin.

This structure has several advantages: on one hand, it solves the problems of adhesion of the barrier to the other sheets of the material, because aluminium and polyethylene or polypropylene are embedded in the assembly impregnated with resin, while on the other hand it allows the use of a much thinner layer of aluminium (of the order of 4 µm) than in the case of a barrier made up of one sheet of aluminium (which then requires a thickness of about 30 µm). The cost of the barrier is therefore lower.

Two barriers incorporated into a single laminated material can be identical, but they can also be of different compositions and characteristics from each other.

There now follows a description of experimental results, on the basis of which it will be apparent that the incorporation of the barrier in accordance with the invention is very effective when it comes to preventing deformation of the material under extreme temperature and humidity conditions.

For the tests, a basic layered material with the following composition was used:
overlay layer
decorative layer
28 sheets of kraft paper
decorative layer
overlay layer
1 sheet of kraft paper
aluminium foil
1 sheet of kraft paper
(floor)

The aluminium foil arranged in the lower part constitutes a first barrier; according to the invention, a second barrier has also been incorporated, between the kraft paper sheets of the upper part of the material, thus forming the layered material according to the invention:
overlay layer
decorative layer
1 sheet of kraft paper
second barrier (A,B,C,D or E)
28 sheets of kraft paper
decorative layer
overlay layer
1 sheet of kraft paper
aluminium foil
1 sheet of kraft paper
(floor)

The second barriers incorporated were those indicated above as A,B,C,D and E.

The material with a single barrier (prior art) and the materials with each of the barriers A,B,C,D,E (invention) were submitted to a curvature test in a climatic chamber and to a test of adhesiveness of the second barrier, the results of which are shown in Table 1.

The conditions of the test in climatic chamber were 96% relative humidity and 40°C temperature, and 500 x 200 mm test-pieces of each material were used. Curvature was tested after 72 hours and after 168 hours, by measuring the distance (expressed in mm) from the centre of the back of the test-piece to the ground.

The adhesiveness was evaluated after 30 minutes at 120°C.

As can be seen from the results, the performance of the new material is much superior to that of the material without the second barrier, particularly for the barriers of types C, D and E; with reference to adhesiveness, it is clear from the tests that the barriers of types B and E are the most advantageous.

**Table 1**

| **Material** | **Initial curvature** | **Curvature 72h** | **Curvature 168h** | **Adhesiven.** |
|---|---|---|---|---|
| No barrier | 0.56 | 4.00 | 4.92 | --- |
| Barrier A | 0.03 | 2.10 | 2.30 | Poor |
| Barrier B | 0.12 | 1.98 | 2.23 | Good |
| Barrier C | 0.34 | 1.51 | 1.97 | Normal |
| Barrier D | 0.28 | 1.42 | 1.73 | Normal |
| Barrier E | 0.18 | 1.99 | 1.46 | Good |

Although specific embodiments of the layered material of the invention have been described and shown, this material allows variations and modifications which an expert in the subject may incorporate depending on the specific requirements of each case, and which must be considered within the scope of protection defined by the appended claims.

For example, although it has been mentioned that the material generally reproduces the appearance of a wooden parquet floor, it is obvious that it could have any other desired decorative effect.

## Claims

1. High-pressure layered material for floors, which comprises a plurality of sheets of kraft paper (10) impregnated with phenolic resins, at least one decorative layer (20,20'), at least one overlay of high resistance to abrasion (30,30') and a first barrier (40) arranged in such a manner as to prevent penetration of humidity into the material from its lower part, the assembly being compacted at high pressure and temperature, **characterised in that** it includes at least a second barrier (50,60) incorporated into the assembly prior to compacting and **in that** the second barrier is arranged in such a manner as to limit penetration of humidity into the sheets of kraft paper from the upper part.

2. Layered material as claimed in Claim 1, **characterised in that** said second barrier (60) is situated between two sheets of kraft paper (10) impregnated with phenolic resins.

3. Layered material as claimed in Claim 1, **characterised in that** said second barrier (50) is situated between one decorative layer (20) and the first sheet of kraft paper (10) impregnated with phenolic resins.

4. Layered material as claimed in any of the previous claims, **characterised in that** the barriers (40,50,60) comprise at least one layer of a material selected from aluminium, high-density polyethylene, polypropylene and kraft paper pre-impregnated with epoxy resin.

5. Layered material as claimed in Claim 4, **characterised in that** the barriers (40,50,60) are made up of several layers, of different materials.

6. Layered material as claimed in Claim 5, **characterised in that** the barriers (40,50,60) comprise two exterior sheets of kraft paper (71,72) and one intermediate film of polyethylene or polypropilene (73) metallised with a layer of aluminium (74), the assembly being impregnated with a phenolic resin.

7. Layered material as claimed in any of Claims 4 to 6, **characterised in that** at least one of the exposed sides of the barriers (40,50,60) is treated in order to improve its adhesiveness.

## Patentansprüche

1. Hochdruck-Schichtmaterial für Böden, das eine Vielzahl von Schichten aus Kraft-Papier (10), das mit Phenolharzen imprägniert ist, zumindest eine dekorative Schicht (20, 20'), zumindest eine Deckschicht mit hoher Beständigkeit gegenüber Abrieb (30, 30') und eine erste Barriere (40) umfasst, die in einer derartigen Weise angeordnet ist, daß das Eindringen von Feuchtigkeit in das Material von dessen unterem Teil aus verhindert wird, wobei die Anordnung bei hohem Druck und hoher Temperatur verdichtet wird,
**dadurch gekennzeichnet, daß**
es zumindest eine zweite Barriere (50, 60) einschließt, die in die Anordnung vor dem Verdichten eingebaut wird, und
**dadurch gekennzeichnet, daß** die zweite Barriere in einer derartigen Weise angeordnet ist, daß sie das Eindringen von Feuchtigkeit in die Kraft-Papierschichten vom oberen Teil aus begrenzt.

2. Schichtmaterial nach Anspruch 1,
**dadurch gekennzeichnet, daß**
die zweite Barriere (60) sich zwischen zwei Schichten Kraft-Papier (10) befindet, die mit Phenolharzen imprägniert sind.

3. Schichtmaterial nach Anspruch 1,
**dadurch gekennzeichnet, daß**
die zweite Barriere (50) sich zwischen einer dekorativen Schicht (20) und der ersten Schicht des Kraft-Papiers (10), das mit Phenolharzen beschichtet ist, befindet.

4. Schichtmaterial nach einem der vorhergehenden Ansprüche,
**dadurch gekennzeichnet, daß**
die Barrieren (40, 50, 60) zumindest eine Schicht eines Materials umfassen, das aus Aluminium, Niederdruckpolyethylen, Polypropylen und Kraft-Papier ausgewählt ist, das mit Epoxyharz vorimprägniert wurde.

5. Schichtmaterial nach Anspruch 4,
**dadurch gekennzeichnet, daß**
die Barrieren (40, 50, 60) aus mehreren Schichten aufgebaut sind, die aus verschiedenen Materialien bestehen.

6. Schichtmaterial nach Anspruch 5,
**dadurch gekennzeichnet, daß**
die Barrieren (40, 50, 60) zwei äußere Schichten aus Kraft-Papier (71, 72) und eine Zwischenfolie aus Polyethylen oder Polypropylen (73) umfassen, die mit einer Schicht aus Aluminium (74) metallisiert sind, wobei die Anordnung mit einem Phenolharz imprägniert ist.

7. Schichtmaterial nach einem der Ansprüche 4 bis 6,
**dadurch gekennzeichnet, daß**
zumindest eine der exponierten Seiten der Barrieren (40, 50, 60) behandelt ist, um deren Haftvermögen zu verbessern.

## Revendications

1. Matériau stratifié sous haute pression pour les sols, qui comprend une pluralité de feuilles de papier kraft (10) imprégnées de résines phénoliques, au moins une couche décorative (20, 20'), au moins un revêtement à haute résistance à l'abrasion (30, 30') et une première barrière étanche (40) agencée de telle manière qu'elle empêche la pénétration d'humidité dans le matériau depuis sa partie inférieure, l'ensemble étant compacté sous haute pression et à température élevée, **caractérisé en ce qu'**il inclut au moins une seconde barrière étanche (50, 60) incorporée dans l'ensemble préalablement au compactage, et **en ce que** la seconde barrière étanche est agencée de telle manière qu'elle limite la pénétration d'humidité dans les feuilles de papier kraft depuis sa partie supérieure.

2. Matériau stratifié selon la revendication 1, **caractérisé en ce que** ladite seconde barrière étanche (60) est positionnée entre deux feuilles de papier kraft (10) imprégnées de résines phénoliques.

3. Matériau stratifié selon la revendication 1, **caractérisé en ce que** ladite seconde barrière étanche (50) est positionnée entre une couche décorative (20) et la première feuille de papier kraft (10) imprégnée de résines phénoliques.

4. Matériau stratifié selon l'une quelconque des revendications précédentes, **caractérisé en ce que** les barrières étanches (40, 50, 60) comprennent au moins une couche d'un matériau sélectionné parmi l'aluminium, le polyéthylène haute densité, le polypropylène, et du papier kraft pré-imprégné de résine époxyde.

5. Matériau stratifié selon la revendication 4, **caractérisé en ce que** les barrières étanches (40, 50, 60) sont constituées de plusieurs couches, de différents matériaux.

6. Matériau stratifié selon la revendication 5, **caractérisé en ce que** les barrières étanches (40, 50, 60) comprennent deux feuilles externes de papier kraft (71, 72) et un film intermédiaire de polyéthylène ou polypropylène (73) métallisé avec une couche d'aluminium (74), l'ensemble étant imprégné d'une résine phénolique.

7. Matériau stratifié selon l'une quelconque des revendications 4 à 6, **caractérisé en ce qu'**au moins l'une des faces exposées des barrières étanches (40, 50, 60) est traitée en vue d'améliorer son adhésivité.
